# EUROPÄISCHE PATENTSCHRIFT

(11) **EP 0 962 675 B1**
(45) Veröffentlichungstag und Bekanntmachung des Hinweises auf die Patenterteilung: **24.10.2001**
(21) Anmeldenummer: 99109577.9
(22) Anmeldetag: 14.05.1999
(51) Int. Cl.: F16C 33/78, F16J 15/32

(54) **Wälzlager mit Strombrücke**
Rolling element bearing with connector for electric currant
Palier à roulement avec connexion électrique

(30) Priorität: 29.05.1998 DE 19824022
(43) Veröffentlichungstag der Anmeldung: 08.12.1999
(73) Patentinhaber: SKF GmbH, 97421 Schweinfurt (DE)
(72) Erfinder: Köttritsch, Hubert, 3300 Amstetten (AT); Schweitzer, Ferdinand, 3352 St. Peter (AT)
(74) Vertreter: Gosdin, Michael, Dr.

(56) Entgegenhaltungen:
- EP-A- 0 787 915
- US-A- 4 797 013
- US-A- 4 856 916
- US-A- 5 139 425
- US-A- 5 812 908
- PATENT ABSTRACTS OF JAPAN vol. 017, no. 500 (M-1477), 9. September 1993 (1993-09-09) & JP 05 126158 A (SONY CORP), 21. Mai 1993 (1993-05-21)

## Beschreibung

Die Erfindung betrifft ein Wälzlager, bestehend aus einem Innen- und einem Außenring und dazwischen angeordneten Wälzkörpern, mit mindestens auf einer Seite,des Wälzlagers angeordneter Dichtung, die als Strombrücke zur Ableitung des zwischen den beiden Lagerringen auftretenden elektrischen Stromes dient, wobei die Dichtung aus einer an einem der Lagerringe befestigten, im wesentlichen flachen Scheibe aus einem elektrisch gut leitendem Werkstoff und einem am anderen Lagerring befestigten Ring besteht und wobei die Scheibe und der Ring in elektrisch leitender Verbindung stehen.

Wälzlager in elektrischen Maschinen, z.B. Fahrmotoren in elektrischen Triebfahrzeugen, sind dem Stromdurchgang ausgesetzt. Stromdurchgang durch Wälzlager ruft bei Überschreiten einer gewissen Stromdichte in den Berührungspunkten zwischen den Wälzkörpern und den Laufbahnen Zerstörungen der Oberflächen und damit des Wälzlagers hervor. Wälzlager, die Stromdurchgang ausgesetzt sind, müssen deshalb vom Stromdurchgang so weit entlastet werden, daß die gefährliche Grenze der Stromdichte im Wälzlager nicht erreicht bzw. nicht überschritten wird. Es ist zu diesem Zweck bekannt, außerhalb des Wälzlagers Strombrücken vorzusehen, die aus einem Schleifring mit einer oder mehreren Bürsten bestehen. Der Übergangswiderstand muß dabei so bemessen sein, daß eine Stromentlastung des Wälzlagers eintritt.

Es ist weiterhin bekannt, den Käfig oder die Dichtung des Wälzlagers als Strombrücke vorzusehen.

Durch die EP 0 787 915 A1 ist ein Wälzlager bekannt, dessen Wälzkörper aus einem elektrisch nichtleitenden Werkstoff bestehen und an dessen einem Lagerring eine Dichtung oder dgl. befestigt ist, die beide Lagerringe berührt und elektrisch leitend ausgebildet ist, so daß der elektrische Strom aus dem Wälzlager abgeleitet oder elektrische Signale durch das Wälzlager hindurchgeleitet werden können.

Die Wälzkörper sind bei dieser bekannten Lösung entweder vollständig aus einem nichtleitenden Keramikwerkstoff gefertigt oder mit einem Überzug aus diesem Material überzogen, die Dichtung besteht aus einem geeigneten Kunststoff.

Des weiteren ist aus der US 5 139 425 A sowie aus der US 5 812 908 A jeweils ein Wälzlager der eingangs genannten Gattung bekannt

Aufgabe der vorliegenden Erfindung ist es, ein Wälzlager der eingangs genannten Art zu schaffen, bei dem die Wälzlagerteile selbst nicht aus einem besonderen Werkstoff gefertigt oder mit diesem überzogen werden müssen und bei dem in sinnvoller Weise ein dem jeweiligen Anwendungsfall angepaßter Stromübergang erreichbar ist.

Gelöst wird diese Aufgabe nach der vorliegenden Erfindung dadurch, daß ein ringförmiger beidseitig begrenzter Raum vorgesehen ist, in den die Scheibe mit ihrem freien Rand eingreift, wobei der Ring U-förmig ausgebildet ist und den beidseitig begrenzten Raum bildet und die Scheibe mit ihrem freien Rand in den Raum zwischen den radialen Schenkeln dieses U-förmigen Ringes eingreift.

Durch die zweiteilige Ausbildung ist es möglich, den den elektrischen Strom übernehmenden Ring, so auszubilden, daß er den Strom gleich weiterleitet, so daß dieser nicht mehr den zweiten Lagerring durchfließen muß. Zu diesem Zweck kann der Ring nach einem weiteren Merkmal der Erfindung mit entsprechenden Stromleitern, wie z.B. angelötete Erdungskabel oder. dgl., die mit einem Erdungspunkt verbunden werden, ausgebildet werden.

Nach einem weiteren vorteilhaften Merkmal der Erfindung wird zur Verbesserung der Stromübertragung die Scheibe am Umfang des freien Randes mit Bürsten oder dgl. aus elektrisch gut leitendem Werkstoff versehen, die an dem Ring zur Anlage kommen.

Mit diesen Ausführungsformen wird einerseits die Dichtwirkung verbessert und andererseits der freie Rand der Scheibe selbst oder - wenn dieser mit Bürsten versehen ist - werden die Bürsten vor Einflüssen von außen besser geschützt.

Diese Ausbildungen haben weiter den Vorteil, daß der beidseitig begrenzte Raum, in den der freie Rand der Scheibe eingreift, nach einem weiteren Merkmal der Erfindung mit einem elektrisch gut leitfähigen Schmierfett gefüllt werden kann, das den Stromübergang verbessert Dieses Fett kann weiterhin elektrisch gut leitfähige Zusätze, wie z.B. Graphit, Eisenpulver oder dgl. enthalten, die eine weitere Verbesserung der elektrischen Leitfähigkeit erbringen. Außerdem dient das Schmierfett auch zur Abdichtung des Lagers.

Bei der Verwendung von Schmierfett im ringförmigen Raum ist es nach einem weiteren Merkmal der Erfindung vorteilhaft, die Scheibe mit dem umlaufenden und den Ring mit dem stillstehenden Lagerring zu verbinden. Durch diese Maßnahmen wird das Schmierfett, das sich durch Vibrationen im Betrieb aus dem beidseitig begrenzten Raum lösen kann, durch Fliehkraft, die durch die Rotation der Scheiben entsteht, zurück in den ringförmigen Raum geworfen, um die ununterbrochene elektrische Leitfähigkeit des Systems zu gewährleisten.

Selbstverständlich ist es auch möglich, das erfindungsgemäße Wälzlager zur Übertragung von elektrischen Signalen zwischen einem drehenden und einem stillstehenden Maschinenteil einzusetzen.

Die Erfindung soll nachstehend anhand einiger Ausführungsbeispiele näher beschrieben werden.

Es zeigen:
- Figur 1: ein erfindungsgemäßes Wälzlager mit Dichtung im Schnitt,
- Figur 2 bis 4: einige Ausführungsbeispiele der Dichtung im Schnitt.

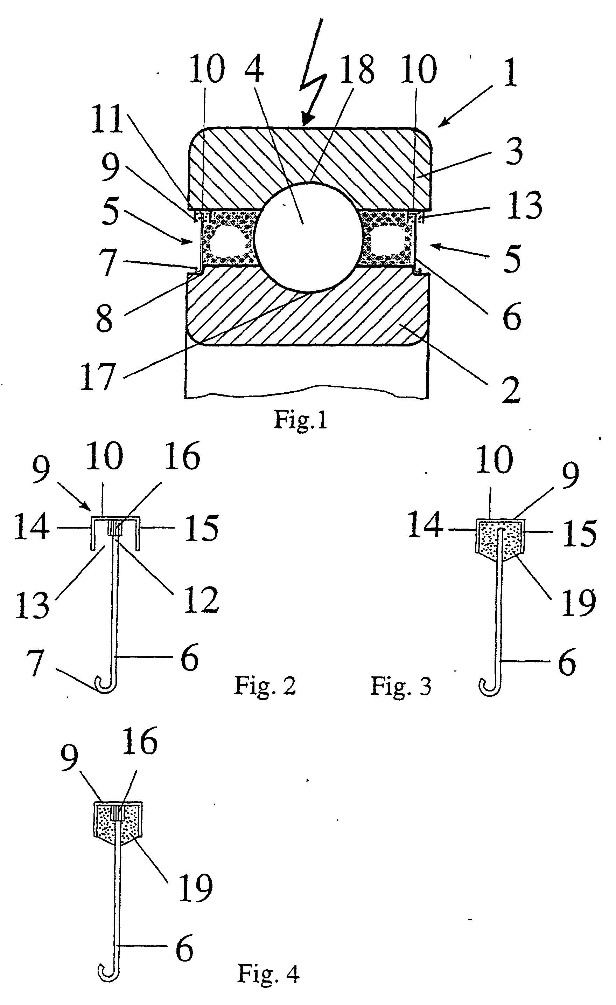

Das Wälzlager 1 nach Figur 1 besteht aus dem Innenring 2, dem Außenring 3 und mehreren am Umfang verteilten und in einem - nicht dargestellten - Käfig geführten Wälzkörpern 4, hier Kugeln. Dieses Wälzlager 1 ist beispielsweise in einem Fahrmotor für Schienenfahrzeuge eingesetzt und einem elektrischen Stromfluß - angedeutet durch den Blitz - ausgesetzt.

Zur Überleitung des elektrischen Stromes ist das Wälzlager I - im vorliegenden Beispiel auf beiden Seiten - mit einer Dichtung 5 versehen, bestehend aus einer Scheibe 6, welche mit einem gefalzten Innenabschnitt 7 in einer Ringnut 8 im Innenring 2 befestigt ist, und einem U-förmig ausgebildeten Ring 9, der mit seinem hülsenförmigen Basisschenkel 10 auf der Schulterfläche 11 des Außenringes 3 befestigt ist. Der freie Rand 12 der Scheibe 6 greift in den Raum 13 zwischen den radial verlaufenden Schenkeln 14 und 15 des Ringes 9.

Gemäß Ausführungsbeispiel nach Figur 2 ist der freie Rand 12 der Scheibe 6 am Umfang mit Bürsten 16 versehen, die mit dem Ring 9 in Berührung stehen und somit den Stromübergang ermöglichen, ohne daß der Strom über die Berührungsstellen zwischen den Wälzkörpern 4 und den Laufbahnen 17, 18 des Innen- 2 bzw. Außenringes 3 fließt.

Beim Ausführungsbeispiel nach Figur 3 ist der Raum 13 zwischen den radial verlaufenden Schenkeln 14 und 15 mit elektrisch gut leitendem Schmierfett 19 gefüllt Dieses Schmierfett 19 stellt die leitende Verbindung zwischen der Scheibe 6 und dem Ring 9 dar.

Beim Ausführungsbeispiel nach Figur 4 - es zeigt die Kombination von Figur 2 und Figur 3 - ist die Scheibe 6 mit Bürsten 16 versehen und der Raum 13 mit Schmierfett 19 gefüllt. Damit wird der Strom sowohl von den Bürsten als auch von dem Schmierfett übertragen.

Die Scheibe 6 oder der Ring 9 kann in geeigneter Weise mit - nicht dargestellten - Einrichtungen zur Ableitung des elektrischen Stromes versehen bzw. verbunden sein.

## Patentansprüche

1. Wälzlager, bestehend aus einem Innen- (2) und einem Außenring (3) und dazwischen angeordneten Wälzkörpern (4), mit mindestens auf einer Seite des Wälzlagers angeordneter Dichtung (5), die als Strombrücke zur Ableitung des zwischen den beiden Lagerringen (2, 3) auftretenden elektrischen Stromes dient, wobei die Dichtung (5) aus einer an einem der Lagerringe (2 bzw. 3) befestigten, im wesentlichen flachen Scheibe (6) aus einem elektrisch gut leitenden Werkstoff und einem am anderen Lagerring (3 bzw. 2) befestigten Ring (9) besteht und wobei die Scheibe (6) und der Ring (9) in elektrisch leitender Verbindung stehen,
**dadurch gekennzeichnet,**
**daß** ein ringförmiger beidseitig begrenzter Raum (13) vorgesehen ist, in den die Scheibe (6) mit ihrem freien Rand (12) eingreift,
wobei der Ring (9) U-förmig ausgebildet ist und den beidseitig begrenzten Raum (13) bildet und die Scheibe (6) mit ihrem freien Rand (12) in den Raum (13) zwischen den radialen Schenkeln (14, 15) dieses U-förmigen Ringes (9) eingreift.

2. Wälzlager nach Anspruch 1, **dadurch gekennzeichnet, daß** der Ring (9) mit Einrichtungen zur Weiterleitung des elektrischen Stromes versehen ist.

3. Wälzlager nach Anspruch 1 oder 2, **dadurch gekennzeichnet, daß** die Scheibe (6) am Umfang des freien Randes (12) mit Bürsten (16) oder dgl. aus elektrisch gut leitendem Werkstoff versehen ist, die an dem Ring (9) zur Anlage kommen.

4. Wälzlager nach Anspruch 3, **dadurch gekennzeichnet, daß** der beidseitig begrenzte Raum (13) mit einem elektrisch gut leitfähigen Schmierfett (19) ausgefüllt ist.

5. Wälzlager nach Anspruch 4, **dadurch gekennzeichnet, daß** das Schmierfett (19) elektrisch gut leitfähige Zusätze, wie z.B. Graphit, Eisenpulver oder dgl., aufweist

6. Wälzlager nach einem der Ansprüche 1 oder 5, **dadurch gekennzeichnet, daß** die Scheibe (6) an dem umlaufenden Lagerring (2) und der Ring (9) an dem stillstehenden Lagerring (3) angeordnet ist.

## Claims

1. A rolling bearing comprising an inner race (2) and an outer race (3) and rolling elements (4) disposed between them, with at least one seal (5) which is arranged on one side of the rolling bearing and which serves as a current bridge for discharging the electric current occurring between the two bearing races (2, 3), wherein the seal (5) comprises a substantially flat disc (6) fastened to one of the bearing races (2 or 3) and composed of a material which has good electrical conductivity, and a ring (9) fastened to the other bearing race (3 or 2), and wherein the disc (6) and the ring (9) are in electrically conductive connection, **characterised in that** there is provided a space (13) bounded annularly on both sides, in which the free edge (12) of the disc (6) engages, wherein the ring (9) is U-shaped and forms the space (13) bounded on both sides and the disc (6) engages with its free edge (12) in the space (13) between the two radial arms (14, 15) of this U-shaped ring (9).

2. A rolling bearing according to Claim 1, **characterised in that** the ring (9) is provided with means for relaying the electric current.

3. A rolling bearing according to Claim 1 or 2, **characterised in that** the disc (6) is provided at the periphery of its free edge (12) with brushes (16) or the like consisting of material with good electrical conductivity, which are applied against the ring (9).

4. A rolling bearing according to Claim 3, **characterised in that** the space (13) bounded on both sides is filled with a lubricating grease (19) which has good electrical conductivity.

5. A rolling bearing according to Claim 4, **characterised in that** the lubricating grease (19) has additives with good electrical conductivity, for example graphite, iron powder or the like,

6. A rolling bearing according to either Claim 1 or Claim 5, **characterised in that** the disc (6) is disposed on the rotating bearing race (2) and the ring (9) is disposed on the stationary bearing race (3).

## Revendications

1. Palier à roulement, comprenant une bague de roulement intérieure (2) et une bague de roulement extérieure (3) ainsi que des corps roulants (4) disposés entre celles-ci, avec au moins d'un côté du palier à roulement, un joint (5) qui fait office de pont conducteur pour évacuer le courant électrique qui apparaît entre les deux bagues de roulement (2, 3), le joint (5) étant formé d'une rondelle (6) essentiellement plate fixée à l'une des bagues de roulement (2 ou 3) et d'une bague (9) fixée à l'autre bague de roulement (3 ou 2), la rondelle (6) et la bague (9) étant reliées électriquement l'une à l'autre, **caractérisé en ce qu'**il est prévu une chambre (13) annulaire limitée de deux côtés, dans laquelle la rondelle (6) pénètre avec son bord libre (12), la bague (9) étant conformée en U et formant la chambre (13) limitée des deux côtés et la rondelle (6) pénètrant avec son bord libre (12) dans la chambre (13) entre les ailes (14, 15) radiales de ladite bague (9) en forme de U.

2. Palier à roulement selon la revendication 1, **caractérisé en ce que** la bague (9) est pourvue de moyens pour transmettre le courant électrique.

3. Palier à roulement selon la revendication 1 ou 2, **caractérisé en ce que** la bague (9), sur la périphérie du bord libre (12), est pourvue de brosses (16) ou similaires en un matériau bon conducteur du courant électrique, qui viennent en appui sur la bague (9).

4. Palier à roulement selon la revendication 3, carctérisé en ce que la chambre (13) limitée des deux côtés est remplie d'une graisse (19) bonne conductrice du courant électrique.

5. Palier à roulement selon la revendication 5, **caractérisé en ce que** la graisse (19) contient des additifs bons conducteurs du courant électrique, comme par exemple du graphite, de la limaille de fer ou similaire.

6. Palier à roulement selon une des revendications 1 ou 5, **caractérisé en ce que** la rondelle (6) est montée sur la bague de roulement (2) tournante et la bague (9) sur la bague de roulement (3) fixe.
